# EUROPEAN PATENT APPLICATION

(11) **EP 4 749 906 A1**
(43) Date of publication of application: **27.05.2026**
(21) Application number: 24214138.0
(22) Date of filing: 20.11.2024
(51) Int. Cl.: H02M 3/335

(54) **RESONANT HYBRID FLYBACK CONVERTER FOR WIDE OUTPUT WINDOW RANGES**

(71) Applicant: Tridonic GmbH & Co. KG, 6851 Dornbirn (AT)
(72) Inventor: Schneider, Miguel Philipp, 6851 Dornbirn (AT); Romano, Fabio, 6851 Dornbirn (AT); Lochmann, Frank, 6851 Dornbirn (AT)
(74) Representative: Rupp, Christian

(57) **Abstract**

The present invention provides a power converter for LED drivers. The power converter comprises a primary-side switching circuit configured to receive a DC input voltage, a transformer having a primary winding and a secondary winding, wherein the primary winding is connected to the primary-side switching circuit, and the secondary winding is connected to a secondary-side rectification circuit, the secondary-side rectification circuit configured to supply an output voltage to the LED load, and a resonant capacitor connected in series with the primary winding. In particular, the resonant capacitor has a voltage-dependent capacitance that decreases with increasing voltage across it.

## Description

### TECHNICAL FIELD

The present invention relates to power converters, specifically to resonant hybrid flyback (RH-FLB) converters for driving LED loads. The invention is particularly relevant to applications requiring wide output voltage ranges, such as LED drivers where load conditions can vary significantly.

### BACKGROUND

LED drivers are essential components in modern lighting applications, valued for their energy efficiency and controllability. Among various power conversion topologies used for driving LEDs, RH-FLB converters have gained popularity due to their ability to minimize switching losses and reduce electromagnetic interference (EMI) by enabling soft-switching.

In a typical RH-FLB converter design, the resonance between the transformer and the resonant capacitor defines the operating frequency and the switching behavior. However, these designs often face significant challenges when operating across a wide range of output voltages. This is particularly relevant in LED applications, where the load voltage may vary due to different LED configurations, dimming requirements, and other operational conditions.

At low output voltages, conventional RH-FLB designs may encounter extended resonant periods, which can limit the control range of the low-side switch's on-time (Ton). This constraint may lead to inefficient operation under low voltage conditions. Conversely, at high output voltages, the resonant period may become too short, which can lead to hard switching and associated problems such as increased power loss, thermal stress, and reduced component lifespan. These challenges restrict the operational range and adaptability of traditional RH-FLB converters, making it difficult to maintain optimal performance across varying load conditions.

### SUMMARY

In view of the above-discussed challenges, the objective of this invention is to introduce an innovative converter architecture that can support wide output voltage ranges while maintaining efficient operation and soft-switching characteristics. One objective is to enable power converters to dynamically adapt to varying output voltages without compromising performance. Additionally, the invention aims to achieve this adaptability with a simplified control mechanism, reducing complexity and enhancing reliability in a wide range of operating conditions.

These and other objectives are achieved by the solution of this disclosure as described in the independent claims. Advantageous implementations are further defined in the dependent claims.

According to a first aspect of the invention, a power converter for driving an LED load is provided. The power converter comprises a primary-side switching circuit configured to receive a DC input voltage. The converter includes a transformer with a primary winding and a secondary winding, where the primary winding is connected to the primary-side switching circuit and the secondary winding is connected to a secondary-side rectification circuit. The secondary-side rectification circuit is configured to supply an output voltage to the LED load. Additionally, a resonant capacitor is connected across the primary winding of the transformer. The resonant capacitor has a voltage-dependent capacitance that decreases as the voltage across it increases.

The proposed power converter is particularly a RH-FLB converter. The voltage-dependent behavior of the capacitor enables dynamic adjustment of the converter's resonant characteristics based on the output voltage, allowing the converter to maintain efficient operation across a range of output voltages. This design supports soft-switching, reduces switching losses, and enhances overall efficiency.

According to an implementation of the first aspect of the invention, the resonant capacitor and primary winding form a resonant circuit with a variable resonant period. At lower output voltages, the resonant capacitor exhibits a higher capacitance, resulting in a longer resonant period, while at higher output voltages, the capacitance exhibits a lower capacitance, resulting in a shorter resonant period.

This configuration enables the resonant period to dynamically adjust in response to actual output conditions, thereby allowing a broad output voltage range. Specifically, as the output voltage rises, the resonant period shortens due to the reduction in the capacitance of the voltage-dependent resonant capacitor. This adaptive resonant period allows the converter to operate efficiently over a wide range of output voltages, optimizing switching performance to meet varying load requirements.

In one implementation of the first aspect, the primary-side switching circuit includes a high-side switch and a low-side switch arranged in a half-bridge configuration. The primary winding of the transformer is connected to the midpoint between the high-side switch and the low-side switch.

This configuration provides a robust and effective arrangement for controlling the switching cycles necessary for efficient energy transfer.

In a further implementation of the first aspect, the low-side switch is configured to have a longer on-time (Ton) at lower output voltages and a shorter Ton at higher output voltages.

Advantageously, adjusting the Ton of the low-side switch according to the output voltage enhances control over the power transfer and maintains efficient operation by matching the switching behavior to the load conditions.

In a further implementation of the first aspect, the Ton time of the low-side switch is adjustable based on a predetermined lookup table (LUT).

Advantageously, a predetermined LUT may be used to adjust the Ton time of the low-side switch. This lookup table contains predefined Ton values based on output voltage ranges, allowing the low-side switch timing to be dynamically optimized based on varying output conditions. This approach simplifies the control mechanism and ensures consistent performance without requiring complex real-time calculations.

In a further implementation of the first aspect, the transformer has a winding ratio configured so that the voltage across the resonant capacitor is higher than the output voltage by a predetermined factor, preferably around 4:1.

This voltage scaling enhances the effectiveness of the resonant capacitor's voltage-dependent capacitance, allowing it to adapt dynamically in response to output voltage fluctuations.

In a further implementation of the first aspect, the resonant capacitor exhibits a DC-biasing characteristic that results in a capacitance drop of approximately 50% as the voltage across it increases from a minimum to a maximum output voltage.

This characteristic enables the resonant capacitor to respond efficiently to changes in output voltage, ensuring a wide operating range and adaptability to load variations.

In a further implementation of the first aspect, the resonant capacitor may be implemented as a multilayer ceramic capacitor (MLCC), known for its voltage-dependent capacitance and suitability in high-efficiency converter designs.

The use of an MLCC enhances the converter's ability to adapt the resonant period, making it ideal for applications with varying voltage demands, such as LED drivers.

In a further implementation of the first aspect, the resonant capacitor can include multiple capacitors with different loss characteristic curves.

This configuration allows for further customization of the resonance behavior, tailoring the converter to specific operating requirements and enhancing its adaptability across a range of load conditions.

In a further implementation of the first aspect, the secondary-side rectification circuit comprises an output diode connected between the secondary winding and a first output terminal, along with an output capacitor connected between two output terminals of the converter.

This configuration ensures efficient rectification and filtering of the secondary side voltage, providing a stable DC output voltage for the LED load. Preferably, with such configuration, the output voltage can be supplied to the LED load directly without requiring any further converter stage. This direct supply method contributes to the system's overall efficiency and simplicity, ensuring a stable and regulated DC output suitable for driving LED loads.

According to a second aspect of the invention, a system is provided. The system comprises a power converter as described in the first aspect or any of the implementations of the first aspect, and an LED-based load supplied directly, or by means of a further converter stage, by the said power converter.

This system configuration allows for efficient and reliable LED driving across a wide range of output voltages, ensuring high performance across various load conditions. This design supports soft-switching, reduces switching losses, and enhances overall efficiency. Preferably, the output voltage of said power converter can be supplied to the LED load directly without any further converter stage.

According to a third aspect of the invention, a method for operating a power converter as described in the first aspect or any of the implementations of the first aspect is provided. The method comprises receiving a DC input voltage at a primary-side switching circuit; monitoring an output voltage of the power converter and estimating a voltage across the resonant capacitor based on the monitored output voltage, or measuring the voltage across the resonant capacitor; selecting an on-time (Ton) for a low-side switch of the primary-side switching circuit based on the measured or estimated voltage using a predefined lookup table; and dynamically adjusting the on-time of the low-side switch during operation to match changes in the output voltage.

This operational method enables the power converter to adapt its resonant characteristics continuously, achieving optimal performance for varying output voltages. The method enables real-time adaptive control of the low-side switch's on-time by leveraging voltage monitoring and a predefined lookup table, ensuring consistent, efficient performance tailored to the specific demands of LED load applications.

All steps that are performed by the various components described in this application, as well as the functionalities described to be performed by the various components, are intended to mean that the respective component is adapted to or configured to perform the respective steps and functionalities. Even if, in the following description of specific embodiments, a specific functionality or step to be performed by external components is not reflected in the description of a specific detailed element of that component that performs that specific step or functionality, it should be clear to a skilled person that these methods and functionalities can be implemented in respective software or hardware elements, or any kind of combination thereof.

### BRIEF DESCRIPTION OF DRAWINGS

The above-described aspects and implementation forms are now further explained with respect to the drawings by way of example only, and not for limitation. In the drawings:
- Figure 1: shows an exemplary power converter topology according to an embodiment of this invention.
- Figure 2: (a) shows exemplary inductor currents in a conventional RH-FLB converter circuit, and (b) show exemplary waveforms in a conventional RH-FLB converter circuit.
- Figure 3: shows DC bias characteristic of an exemplary resonant capacitor according to an embodiment of this invention.
- Figure 4: shows exemplary waveforms in a proposed RH-FLB converter according to an embodiment of this invention.
- Figure 5: shows a method according to an embodiment of this invention.

### DETAILED DESCRIPTION OF EMBODIMENTS

Illustrative embodiments of a power converter, a system, and a method for operating the power converter are described with reference to the figures. Although this description provides a detailed example of possible implementations, it should be noted that the details are intended to be exemplary and in no way limit the scope of the application.

An embodiment/example may refer to other embodiments/examples. For example, any description including but not limited to terminology, element, process, explanation, and/or technical advantage mentioned in one embodiment/example is applicable to the other embodiments/examples. The same elements are labeled with the same reference signs and may function similarly or likewise.

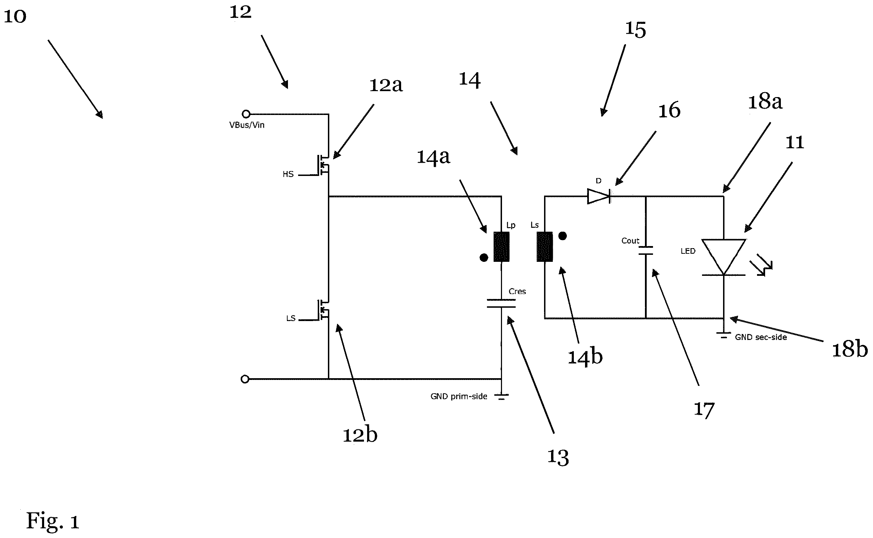

Figure 1 shows an embodiment of a power converter 10 designed for driving an LED load 11. The power converter is particularly a RH-FLB converter. Referring to Figure 1, the power converter 10 includes a primary-side switching circuit 12, which is configured to receive a DC input voltage. The DC input voltage may come from a DC source, such as a bus voltage.

The power converter 10 further comprises a transformer 14 having a primary winding 14a and a secondary winding 14b. The primary winding 14a is connected to the primary-side switching circuit 12, while the secondary winding 14b is connected to the secondary-side rectification circuit 15, which supplies an output voltage to the LED load 11.

Possibly, the primary-side switching circuit 12 comprises two switches, a high-side switch 12a and a low-side switch 12b, arranged in a half-bridge configuration. This arrangement allows the switches to alternate in controlling the current flow through the primary winding 14a of the transformer 14. The high-side switch 12a and the low-side switch 12b are connected such that the primary winding 14a is coupled to the midpoint of the two switches. This half-bridge configuration enables efficient switching, optimizing energy transfer from the input voltage to the resonant circuit. These switches may be switching transistors (e.g., MOSFETs) that alternate their on-times to control energy flow in the converter.

The power converter 10 further comprises a resonant capacitor (Cres) 13, which is connected in series with the primary winding 14a of the transformer 14, forming a resonant circuit. The resonant capacitor 13 is a key component of the resonant circuit, as it exhibits a voltage-dependent capacitance that decreases as the voltage across it increases. This DC-biasing characteristic of the resonant capacitor 13 enables the resonant period of the circuit to adapt based on the output voltage conditions.

Specifically, at lower output voltages, the resonant capacitor 13 maintains a higher capacitance, resulting in a longer resonant period for the circuit. At higher output voltages, the capacitance of the resonant capacitor 13 decreases, producing a shorter resonant period.

This dynamic resonant behavior allows the converter 10 to optimize power transfer to the LED load 11 under varying voltage conditions.

The power converter 10 further comprises a secondary-side rectification circuit 15 connected to the secondary winding 14b of the transformer 14. It is configured to supply a stable output voltage to the LED load 11.

In some implementations, the secondary-side rectification circuit 15 includes an output diode 16 and an output capacitor 17. The output diode 16 is connected between the secondary winding 14b and the first output terminal 18a of the power converter 10. The diode 16 ensures that current flows in the correct direction to charge the output capacitor 17. In particular, the diode 16 acts as a rectifier, allowing current to flow to the output capacitor and the LED while blocking reverse current flow from the output to the transformer.

The output capacitor 17 is connected between the two output terminals 18a and 18b of the power converter 10. This capacitor 17 stabilizes the output voltage supplied to the LED load 11, smoothing out any fluctuations resulting from the switching behavior on the primary side. Together, the output diode 16 and the output capacitor 17 ensure a reliable, steady DC output suitable for LED driving.

Notably, Figure 1 also shows a system 1 comprising a power converter 10, and an LED-based load 11 supplied directly, or by means of a further converter stage, by the said power converter 10.

The invention leverages a unique characteristic of certain capacitors, such as ceramic capacitors, which experience a reduction in capacitance as voltage increases. Traditionally seen as an undesirable effect, this capacitance variability is used advantageously in this design to enhance the performance of the RH-FLB converter.

In this circuit, the resonant capacitor 13 is chosen specifically for its voltage-dependent capacitance behavior. At lower LED output voltages, the capacitor maintains a relatively high capacitance, which extends the resonant period and results in a longer duration for the negative current phase. This extended resonant period allows for an increase in the on-time of the low-side switch (LS on-time) without disturbing circuit stability, thus facilitating efficient energy transfer at low output voltages.

As the LED output voltage increases, the capacitance of the resonant capacitor 13 decreases due to the capacitor's inherent characteristics. This reduction in capacitance shortens the resonant period (effectively increasing the resonant frequency), aligning the converter's behavior with the requirements of higher output voltages. The shortened resonant period ensures that energy transfer is optimized for higher voltage conditions, preventing excess LS on-time and maintaining efficient switching.

Overall, this adaptive approach to resonance control allows the converter to operate effectively across a wide range of output voltages, enhancing efficiency and stability while minimizing the need for complex control circuits. By exploiting the voltage-dependent capacitance characteristic of the resonant capacitor, the invention achieves a dynamic adjustment of the resonant period, which adapts to varying load conditions and output requirements.

To better understand the invention, it may be helpful to first examine the limitations of conventional RH-FLB converter designs. In traditional configurations, as the output voltage decreases, the low-side on-time (LS on-time) must be extended to maintain the required energy transfer for achieving the desired lower output voltage. However, increasing the LS on-time introduces several issues that impact efficiency, stability, and component stress, as detailed below.

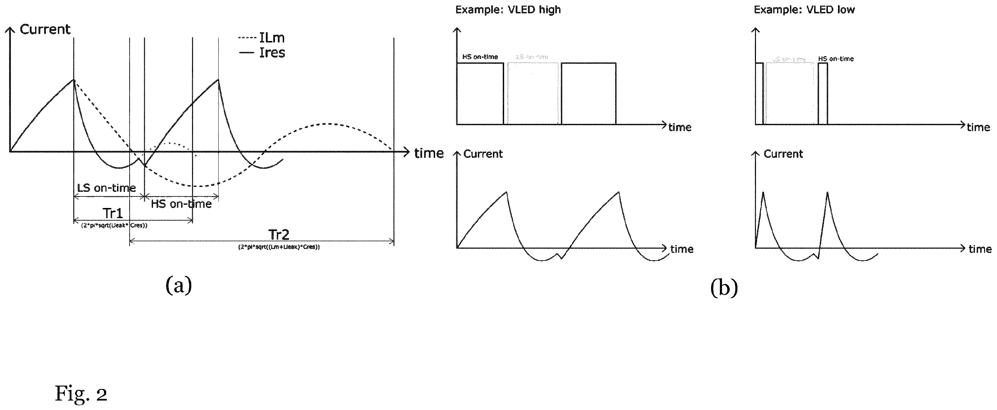

Figures 2(a) and 2(b) illustrate the challenges faced by the RH-FLB converter when operating across varying output voltages, specifically highlighting the issues with the timing of the low-side (LS) and high-side (HS) switches at both high and low output voltage conditions.

Figure 2(a) illustrates the current waveform in a conventional RH-FLB converter circuit, showing the behavior of magnetizing current ILm (dashed line) and resonant current Ires (solid line) over time. This figure demonstrates the switching cycle of the LS and HS switches, highlighting how the resonant periods (Tr1 and Tr2) contribute to the operation of the converter.

At high output voltage (VLED high), as shown on the left side of Figure 2 (b) : the HS on-time is relatively long, allowing adequate energy transfer to the LED load. The LS on-time is shorter, and both on-times are well-balanced.

In this condition, the resonant capacitor's capacitance, as determined by its DC-bias characteristic, supports a smooth, resonant current oscillation. This balanced timing and the resulting current waveforms ensure stable and efficient power transfer without imposing any limitations on the control IC or hardware.

At low output voltage (VLED low), illustrated on the right side of Figure 2(b), the LS on-time needs to be increased to maintain the required energy transfer at the lower voltage. However, as the LS on-time increases, the HS on-time correspondingly shortens. This reduction in HS on-time can become problematic.

Figure 2(a) shows that with a very short HS on-time, the converter's control IC might struggle to generate such brief pulses reliably, leading to potential timing inaccuracies. Additionally, hardware parasitics can interfere with short HS pulses, further reducing switching accuracy and efficiency.

The extended LS on-time is also constrained by the resonant period Tr2 (as shown in Figure 2(a)), which limits the LS on-time to a maximum of one-quarter of Tr2. Exceeding this limit can lead to instability and inefficient power conversion, complicating the ability to reach very low output voltages.

At low output voltages, the necessity for a long LS on-time results in an excessively short HS on-time. This shortened HS on-time can introduce control issues due to the limitations of the control IC and susceptibility to hardware parasitics, as well as resonance constraints set by Tr1 and Tr2. Consequently, achieving stable operation at low output voltages becomes difficult without a solution to dynamically adjust the resonant period.

To address these challenges, this invention propose to choose a resonant capacitor that has a DC-bias characteristic, allowing its capacitance to vary based on the voltage across it.

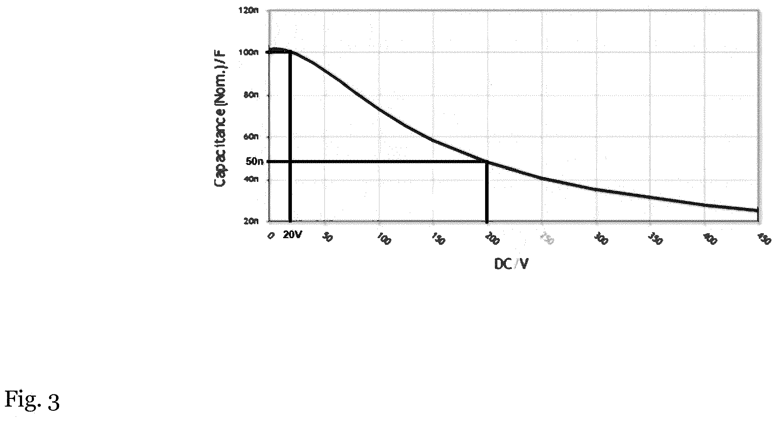

Figure 3 shows the DC bias characteristic of an exemplary resonant capacitor 13 used in the RH-FLB converter, illustrating how its capacitance changes in response to the voltage across it (DC bias voltage). This characteristic enables the converter to operate efficiently across a wide output voltage range, avoiding the limitations highlighted in Figures 2(a) and 2(b). For instance, this resonant capacitor is a 100nF MLCC rated at 450V with an X7T dielectric.

Referring to Figure 3, as the DC bias voltage increases, the capacitance of the resonant capacitor 13 decreases significantly. This is a characteristic of MLCCs with DC-bias sensitivity, where the nominal capacitance drops nonlinearly with increasing applied voltage.

The graph shows that the capacitance of the resonant capacitor 13 begins near 100nF at low voltages (e.g., 20V) and decreases to about 50nF as the voltage across the capacitor rises to approximately 200V. This 50% reduction in capacitance over the voltage range of 20V to 200V matches the requirements of the RH-FLB converter design. This reduction in capacitance follows a smooth, nonlinear curve.

This dynamic capacitance change enables the converter to adjust the resonant period in response to varying output voltages, allowing stable operation across a wide output range. At lower output voltages (and thus lower capacitor voltages), the capacitance remains high, resulting in a longer resonant period. Conversely, at higher output voltages, the reduced capacitance shortens the resonant period, optimizing efficiency.

This automatic adjustment through the capacitor's inherent DC-bias response simplifies the control requirements and reduces the need for complex feedback systems, as the capacitance self-adjusts in response to the output voltage, providing the necessary resonant period adaptation.

By selecting a resonant capacitor with this specific DC bias characteristic, the power converter can maintain high capacitance at low output voltages, allowing for a longer resonant period and stable LS and HS timing. Further, the power converter can decrease capacitance at high output voltages, reducing the resonant period and matching the requirements of higher output conditions.

This design enables the converter to achieve a broad output voltage range while maintaining efficient and stable operation, addressing the challenges shown in Figures 2(a) and 2(b). The DC bias characteristic of the resonant capacitor thus plays a central role in achieving adaptive, efficient resonance control across various operating conditions.

In one example, For the RH-FLB converter design with a transformer winding ratio of 4:1. In this design, the voltage across the resonant capacitor (Vres) corresponds approximately to the output voltage multiplied by the transformer winding ratio. This relationship is illustrated as follows:
When the LED output voltage is 5V, the resonant capacitor sees a voltage of 20V (calculated as Vres=5V×4=20V). When the LED output voltage is 50V, the resonant capacitor sees a voltage of 200V (calculated as Vres=50V×4=200V).

The capacitor needs to exhibit a 50% reduction in capacitance to accommodate this wide output range effectively, ensuring the converter can dynamically adjust its operating conditions to achieve the desired output voltage. This 20V to 200V range is ideal for capacitors with DC-bias characteristics that support large capacitance changes within this range.

The choice of dielectric material is important to ensure the resonant capacitor exhibits the desired DC-biasing effect. MLCC capacitors with certain dielectric types, such as X7R, Y5V, Z5U, and X5R, are known for their susceptibility to DC-bias derating. Each type has unique characteristics:
- X7R: Offers moderate DC derating, typically losing around 30% of capacitance at high voltages.
- Y5V and Z5U: These exhibit the most significant DC derating, with capacitance losses of up to 80% at higher voltages.
- X5R: Similar to X7R but generally more sensitive to voltage losses, especially at higher nominal voltages and smaller case sizes.

X7T is another dielectric type that provides the desired DC-bias characteristic for the RH-FLB converter. It maintains sufficient capacitance at low voltages while significantly reducing capacitance as voltage increases, ideal for a design where the capacitance needs to drop approximately 50% over the operating range.

The DC-biasing behavior of MLCC capacitors with dielectrics like X7T can be leveraged in the RH-FLB converter design to facilitate wide voltage adaptation.

The example provided shows that MLCC capacitors with specific dielectrics can experience substantial capacitance loss across hundreds of volts, achieving losses in the range of 20-70%. For the RH-FLB converter, a 50% capacitance reduction over a 20V to 200V range is well-suited, enabling the resonant capacitor to adapt its behavior according to the output voltage demands without complex external controls. This DC-bias characteristic thus simplifies the converter's design while ensuring effective and efficient performance across varying load conditions.

Using this information, the designer can determine the appropriate resonant capacitor with the desired DC-bias characteristics.

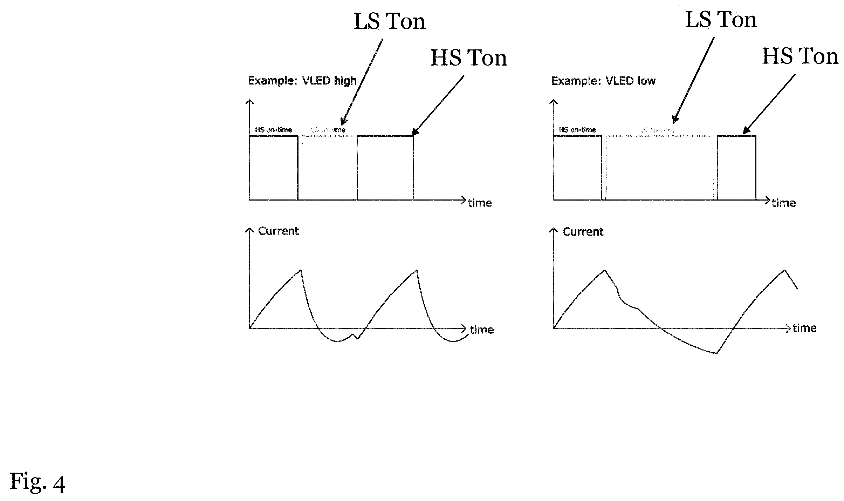

Figure 4 presents a comparative analysis of the timing and current characteristics of the proposed power converter, specifically focusing on its behavior at high and low LED output voltages, denoted as VLED high and VLED low, respectively. This comparison demonstrates the adaptive functionality of the converter equipped with the previously discussed resonant capacitor 13, which has a voltage-dependent capacitance.

Based on the left side of Figure 4 (VLED high), it can be seen that the HS on-time is relatively long, while the LS on-time is shorter. This timing configuration is suitable for maintaining a high output voltage, as it enables sufficient energy transfer during the HS on-time.

In the current waveform shown below, the magnetizing current and the resonant current exhibit smooth, controlled oscillations. The high capacitance of the resonant capacitor at high output voltages helps achieve this resonant behavior, supporting efficient energy transfer to the load.

On the right side of Figure 4 (VLED Low), the LS on-time is extended to maintain the required energy transfer at a lower output voltage, while the HS on-time is shorter. This adjustment in timing allows the converter to operate effectively at a low output voltage.

The current waveform reflects this change: the magnetizing and resonant currents oscillate with a different pattern due to the extended LS on-time and shortened HS on-time. In this scenario, the resonant capacitor's capacitance is higher (due to lower DC bias), which lengthens the resonant period, helping the converter stabilize even at lower voltage levels.

In both cases, the converter 10 adapts its HS and LS on-times based on the output voltage, demonstrating the system's flexibility in responding to varying load demands. The use of a DC-bias-sensitive resonant capacitor is crucial here, as it automatically adjusts its capacitance with changing voltage. This adjustment allows the converter to dynamically modify the resonant period to match the required operational conditions, ensuring efficiency across a wide output voltage range.

At high output voltages, shorter resonant periods and well-balanced HS and LS on-times optimize performance. At low output voltages: Longer resonant periods allow the LS on-time to increase without excessively shortening the HS on-time, maintaining stable operation.

Figure 4 illustrates how the system's adaptive timing, combined with the voltage-dependent behavior of the resonant capacitor, enables the RH-FLB converter to handle a broad range of output voltages while avoiding the issues observed in Figures 2(a) and 2(b) with overly short HS on-times at low output conditions.

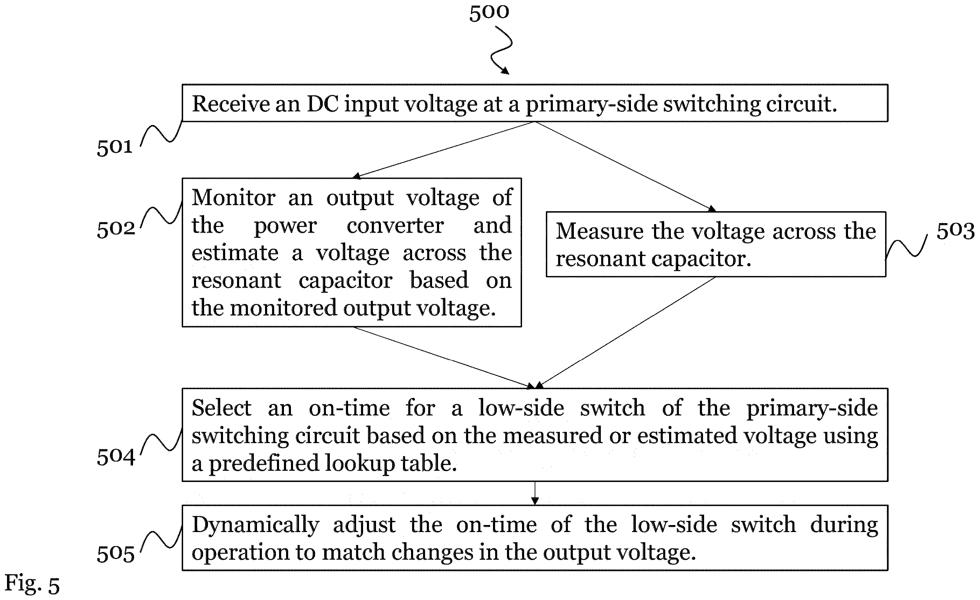

With reference to Fig. 5, an embodiment of a method 500 for operating the proposed power converter 10, is illustrated. The method 500 enables dynamic adjustment of the converter's operation to adapt to varying load conditions, specifically in an LED-driving application. The power converter 10 may the power converter shown in Figure 1.

The method begins with receiving a DC input voltage at the primary-side switching circuit 12 of the power converter 10, as shown in step 501. This input voltage supplies the energy required for the converter to operate and is directed to the primary side of the transformer 14 within the converter circuit. The primary-side switching circuit 12 includes a high-side switch 12a and a low-side switch 12b arranged in a half-bridge configuration to control energy flow through the transformer 14.

Next, in step 502, the method involves monitoring the output voltage (Vout) of the power converter 10. This output voltage represents the voltage supplied to an LED load 11 and is indicative of the load's demand. Alternatively, the method involves a step 503 of measuring the voltage across the resonant capacitor (VresCap) directly. If only the output voltage (Vout) is monitored, the method further includes estimating the voltage across the resonant capacitor 13 (VresCap) based on the output voltage and a predetermined relationship. This relationship takes into account the transformer's winding ratio, which translates the output voltage to an estimated value for the resonant capacitor voltage.

In step 504, the method includes referencing a predefined lookup table (LUT) to select the appropriate on-time (Ton) for the low-side switch 12b based on the measured or estimated voltage (VresCap or Vout). This lookup table stores predefined on-time values for the low-side switch 12b, each corresponding to specific voltage ranges for VresCap or Vout. The selected Ton time is thus matched to the real-time conditions of the resonant circuit, allowing the converter to adapt its switching behavior dynamically.

The use of a lookup table simplifies control by providing predefined values that correspond to varying output conditions, avoiding the need for complex real-time calculations. Each lookup value reflects the DC-biasing characteristic of the resonant capacitor, ensuring that the selected Ton time is optimized to maintain the desired resonant period.

In step 505, the method involves dynamically adjusting the Ton of the low-side switch 12b during operation to align with changes in the output voltage. As the output voltage changes, the resonant capacitor's DC-biasing characteristic causes its capacitance to vary, which in turn influences the resonant period of the converter. By continuously adjusting the Ton time of the low-side switch 12b, the converter 10 can maintain an optimal resonant period in real-time, adapting to different load conditions.

This dynamic adjustment process ensures that the converter 10 operates efficiently across a wide range of output voltages, preventing hard switching and reducing power losses. It also helps maintain stable performance for the LED load by aligning the switching period with the resonant capacitor's voltage-dependent behavior.

Finally, the method may further comprise a step of supplying a regulated output voltage to the LED load 11 via the secondary winding of the transformer. This regulated voltage is adapted to the varying conditions of the LED load, providing a stable power supply while accommodating different voltage levels. The dynamic adjustment of the low-side switch on-time ensures that the output voltage remains smooth and consistent, enhancing the LED load's performance and lifespan.

Figure 5 thus illustrates a detailed embodiment of method 500 for operating the power converter 10, wherein the converter continuously adapts the low-side switch timing to ensure efficient energy transfer and consistent output performance under dynamic load conditions. This adaptive control approach aligns with the invention's goals of simplified control, optimal resonance management, and reliable power delivery across a wide output voltage range, as described in the accompanying claims.

While various embodiments of the present invention have been described above, it should be understood that they have been presented by way of example only, and not by limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations, and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A power converter (10) for driving an LED load (11), comprising:
a primary-side switching circuit (12) configured to receive a DC input voltage (13),
a transformer (14) having a primary winding (14a) and a secondary winding (14b), wherein the primary winding (14a) is connected to the primary-side switching circuit (12), and the secondary winding (14b) is connected to a secondary-side rectification circuit (15),
the secondary-side rectification circuit (15), configured to supply an output voltage to the LED load (11), and
a resonant capacitor (13) connected in series with the primary winding (14a);
wherein the resonant capacitor (13) has a voltage-dependent capacitance that decreases with increasing voltage across it.

2. The power converter (10) of claim 1, wherein the resonant capacitor (13) and the primary winding (14a) forms a resonant circuit with a variable resonant period, wherein at lower output voltages, the resonant capacitor (13) exhibits a higher capacitance, resulting in a longer resonant period, while at higher output voltages, the capacitance (13) exhibits a lower capacitance, resulting in a shorter resonant period.

3. The power converter (10) of any preceding claims, wherein the primary-side switching circuit (12) comprises:
a high-side switch (12a) and a low-side switch (12b) arranged in a half-bridge configuration,
wherein the primary winding (14a) is connected to a middle point of the high-side switch (12a) and the low-side switch (12b).

4. The power converter (10) of claim 3, wherein the low-side switch (12b) is configured to have a longer Ton time in response to lower output voltages and a shorter Ton time in response to higher output voltages.

5. The power converter (10) of claims 4, wherein
the Ton time of the low-side switch (12b) is adjustable based on a predetermined lookup table.

6. The power converter (10) of any preceding claims, wherein the transformer (14) has a winding ratio configured such that the voltage across the resonant capacitor (13) is higher than the output voltage by a predetermined factor, preferably, the winding ratio is approximately 4:1.

7. The power converter (10) of any preceding claims, wherein the resonant capacitor (13) is configured with a DC-biasing characteristic that results in a capacitance drop of approximately 50% when the voltage across the resonant capacitor increases from a first voltage corresponding to a minimum output voltage to a second voltage corresponding to a maximum output voltage.

8. The power converter (10) of any preceding claims, wherein the resonant capacitor (13) comprises a multilayer ceramic capacitor.

9. The power converter (10) of any preceding claims, wherein the resonant capacitor (13) comprises a plurality of different capacitors having different loss characteristic curves.

10. The power converter (10) of any preceding claims, wherein the secondary side rectification circuit (15) comprises:
an output diode (16) connected between the secondary winding (14b) and a first output terminal (18a) of the power converter (10), and
an output capacitor (17) connected between two output terminals (18a, 18b) of the converter (10).

11. A system (1) comprising:
a power converter (10) according to any of the claims 1 to 10, and
an LED-based load (11) supplied directly or by means of a further converter stage of the system (1), by said power converter (10).

12. A method (500) for operating a power converter (10) of claims 1 to 10 for driving an LED load (11), comprising:
receiving (501) a DC input voltage at a primary-side switching circuit (12);
monitoring (502) an output voltage of the power converter (10) and estimating a voltage across the resonant capacitor (13) based on the monitored output voltage, or measuring (503) the voltage across the resonant capacitor (13) ;
selecting (504) an on-time (Ton) for a low-side switch (12b) of the primary-side switching circuit (12) based on the measured or estimated voltage using a predefined lookup table;
dynamically adjusting (505) the on-time of the low-side switch (12b) during operation to match changes in the output voltage.
